# EUROPÄISCHE PATENTSCHRIFT

(11) **EP 4 059 676 B1**
(45) Veröffentlichungstag und Bekanntmachung des Hinweises auf die Patenterteilung: **07.06.2023**
(21) Anmeldenummer: 21163033.0
(22) Anmeldetag: 17.03.2021
(51) Int. Cl.: B26D 1/08, B26D 5/18

(54) **SCHNEIDEMASCHINE MIT MESSERTIEFGANGEINSTELLUNG**
CUTTING MACHINE WITH BLADE DEPTH ADJUSTMENT
MACHINE À COUPER À RÉGLAGE DE LA PROFONDEUR DE LAME

(43) Veröffentlichungstag der Anmeldung: 21.09.2022
(73) Patentinhaber: Krug & Priester GmbH & Co. KG, 72336 Balingen (DE)
(72) Erfinder:
(74) Vertreter: Kohler Schmid Möbus Patentanwälte

(56) Entgegenhaltungen:
- CN-A- 109 834 757
- DE-C- 940 401
- GB-A- 689 441

## Beschreibung

Die Erfindung betrifft eine Schneidemaschine mit einer Schneidunterlage für zu schneidendes Schnittgut, mit einem höhenverfahrbaren Messerbalken, der ein Messer zum Schneiden des aufliegenden Schnittguts trägt, mit einem Schneideantrieb zum Höhenverfahren des Messerbalkens und mit einer Messertiefgangeinstellung zum Höhenverstellen des Messerbalkens relativ zu einem höhenbeweglichen Antriebselement des Schneideantriebs. Eine derartige Vorrichtung ist zum Beispiel aus der GB 689 441 A bekannt.

Schneidemaschinen besitzen in der Regel einen mechanischen Aufbau, der ein Messer, manuell durch Krafteinwirkung des Bedieners oder elektrisch angetrieben, von oben nach unten durch ein zu schneidendes Schnittgut, wie z.B. einen Papierstapel, bewegt. Als Gegenstück zur Messerschneide wird ein Schneidgegenlager in Form einer Schnittleiste benötigt. Diese Schnittleiste ist in der Regel bündig in die Tischoberfläche der Schneidemaschine eingelassen, auf dem das zu schneidende Schnittgut liegt. Da das Messer auch die unterste Lage eines Schnittgutstapels durchtrennen soll, muss das Messer minimal in die Schnittleiste eindringen. Die Schnittleiste ist üblicherweise aus Kunststoff gefertigt; dieser bietet einerseits genügend Festigkeit als Schneidgegenlager und lässt anderseits zu, dass das Messer minimal in die Schnittleiste eindringen kann, ohne beschädigt zu werden. Die Schnittleiste, wie auch das Messer, unterliegen beim Schneiden einem gewissen Verschleiß, sodass beide in regelmäßigen Abständen ausgewechselt werden müssen, um ihre Funktion sicherzustellen.

Es ist also einerseits zu gewährleisten, dass auch die unterste Lage eines Schnittgutstapels durchgeschnitten wird, andererseits sollen aber das Messer und die Schnittleiste bestmöglich geschont werden, um möglichst lange Standzeiten zu erreichen. Dies senkt die Betriebskosten und ist auch aus Gründen der Ressourcenschonung wünschenswert. Es ist also sehr wichtig, mit dem Messer nur genau so weit in die Schnittleiste einzudringen, wie es unbedingt notwendig ist. Sind das Messer und/oder die Schnittleiste verschlissen, so müssen diese ausgetauscht werden.

In das Messer werden zu diesem Zweck Schrauben durch den höhenverfahrbaren Messerbalken der Schneidemaschine geschraubt. Diese Schrauben sind im Messerbalken in Langlöchern höhenverschiebbar geführt. Die Befestigung erfolgt im unteren Umkehrpunkt der Messerbewegung, wobei die Langlöchern eine grobe Lageanpassung der Messerschneide auf die Schnittleiste zulassen, bevor die Schrauben festgezogen werden. Damit liegt das Messer zwar während des Schneidezyklus in seiner untersten Bewegungsstellung auf der Schnittleiste auf, dringt aber nicht in diese ein.

Die nun notwendige Feineinstellung der Messerschneide in Bezug auf die Schnittleiste wird mit einer so genannten Messertiefgangeinstellung vorgenommen. Diese Messertiefgangeinstellung muss feinfühlig erfolgen können, um dem Bediener einfach zu ermöglichen, die optimale Eindringtiefe des Messers in die Schnittleiste einzustellen. Um sicherzustellen, dass einerseits die unterste Lage eines Schnittgutstapels zuverlässig geschnitten wird, anderseits aber das Messer und die Schnittleiste maximal geschont werden, muss die Einstellung sehr exakt erfolgen. Da sowohl das Messer als auch die Schnittleiste während ihrer Einsatzdauer sukzessive verschleißen, muss bis zu deren Austausch gelegentlich nachjustiert werden können.

Oftmals sind die heute verfügbaren Lösungen für den Bediener schlecht zu handhaben, da sich die Stellelemente der Messertiefgangeinstellung nicht an der Frontseite, dem Hauptarbeitsbereich der Schneidemaschine, befinden, sondern beispielsweise seitlich. Dies ist insbesondere dann von Nachteil, wenn die Zugänglichkeit an diesem Punkt aufgrund des Aufstellortes der Schneidemaschine eingeschränkt ist. Es finden sich auch Geräte am Markt, bei denen sich die Verstellung im Maschineninneren hinter einer Gehäuseabdeckung befindet. Diese muss zum Einstellen abgenommen werden. Neben dem zusätzlichen Aufwand ist damit oftmals auch die Zugänglichkeit eines Stellelements der Messertiefgangeinstellung eingeschränkt. Andere Ausführungen befinden sich zwar im Hauptarbeitsbereich der Maschine, jedoch wird die Einstellung nicht mittels einer zentralen Einstellmöglichkeit bewerkstelligt, sondern es müssen mehrere Stellelemente betätigt oder zueinander eingestellt werden, um den gewünschten Effekt zu erzielen. Für den Einstellvorgang sind meist Werkzeuge notwendig. Wenn diese Werkzeuge für keine andere Funktion der Maschine benötigt werden, bedeutet dies zusätzliche Kosten für den Maschinennutzer, insbesondere dann, wenn es sich um Spezialwerkzeuge handelt. Im Verschleiß- oder Verlustfall können diese Werkzeuge dann in der Regel nur als Ersatzteil beim Maschinenhersteller gekauft werden.

Demgegenüber ist es die Aufgabe der vorliegenden Erfindung, bei einer Schneidemaschine der eingangs genannten Art die Messertiefgangeinstellung dahingehend weiterzubilden, dass ein Bediener den Messertiefgang möglichst schnell, einfach, feinfühlig und ergonomisch günstig vornehmen kann.

Diese Aufgabe wird erfindungsgemäß dadurch gelöst, dass die Messertiefgangeinstellung einen am Messerbalken um eine Horizontalachse schwenkbar gelagerten Umlenkhebel, an dem das Antriebselement in einem ersten Radialabstand angelenkt ist, sowie einen am Umlenkhebel in einem zweiten Radialabstand zur Horizontalachse angreifenden Verstellmechanismus zum Verdrehen und Feststellen des Umlenkhebels aufweist.

Erfindungsgemäß erfolgt die Verkürzung bzw. Verlängerung des Höhenabstands zwischen Antriebselement (z.B. Antriebspleuel) und Messerbalken mithilfe eines drehbaren Umlenkhebels, durch dessen Drehung die Höhenlage des Antriebselements in Bezug zum Messerbalken geändert werden kann.

Bevorzugt sollte der kleine notwendige Einstellweg am Messer in einen größeren Einstellweg am Stellelement übersetzt werden. Hierfür kann beispielsweise der zweite Radialabstand größer als der erste Radialabstand sein, insbesondere mindestens doppelt so groß wie der erste Radialabstand sein. Hierfür kann auch der Angriffspunkt des Antriebselements am Umlenkhebel gegenüber der Horizontalachse horizontalversetzt angeordnet und am Umlenkhebel in einem Winkelbereich, bezogen auf die durch die Horizontalachse des Umlenkhebels definierte Horizontalebene, von +/- 60° um die Horizontalachse angeordnet sein.

In einer besonders vorteilhaften Ausführungsform der Erfindung weist der Verstellmechanismus einen Übertragungshebel auf, der einenends am Umlenkhebel angelenkt und anderenends am Messerbalken abgestützt ist. Der Übertragungshebel ermöglicht die Verlagerung des Verstellmechanismus in den direkt zugänglichen Hauptarbeitsbereich der Schneidmaschine. Dabei kann vorteilhaft der Übertragungshebel anderenends exzentrisch an einem Stellelement angelenkt sein, welches am Messerbalken drehbar gelagert ist.

Bevorzugt kann das Stellelement eine Werkzeugaufnahme mit nichtkreisrunder Aufnahmekontur aufweisen, um das Stellelement mittels eines Werkzeugs, insbesondere in Einhandbedienung, zu verdrehen. Dieses Werkzeug kann vorzugsweise auch bei einem Messerwechsel eingesetzt werden. Weiter bevorzugt weisen das Stellelement einen koaxial zu seiner Drehachse angeordneten Zahnkranz und der Messbalken mindestens einen Zahn auf, oder umgekehrt, wobei der Zahnkranz und der mindestens eine Zahn miteinander im Eingriff stehen, um das Stellelement in seiner Drehstellung festzustellen. Zum Verdrehen des Stellelements kann das Stellelement bevorzugt zwischen einer ersten Stellung, in der der Zahnkranz und der mindestens eine Zahn miteinander im Eingriff stehen, und einer zweiten Stellung, in der der Zahnkranz und der mindestens eine Zahn miteinander nicht im Eingriff stehen und das Stellelement gedreht werden kann, axial verschiebbar sein. So wird einerseits das Moment aufgenommen, das über den Übertragungshebel eingeleitet wird, und andererseits kann der Bediener die Einstellung leichtgängig vornehmen.

Bevorzugt ist an dem Messerbalken eine federbelastete Raste angeordnet, die beim Drehen des Stellelements jeweils von einer Zahnlücke zur nächsten Zahnlücke des Zahnkranzes weiterrastet, um dem Bediener eine direkte optische und/ oder haptische Rückmeldung bei der Einstellung zu geben. Alternativ oder zusätzlich können das Stellelement eine seiner Drehrichtung folgende Skala und der Messerbalken eine mit der Skala zusammenwirkende Markierung aufweisen, oder umgekehrt, um dem Bediener eine Orientierungshilfe für die Einstellung zu geben.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Die Erfindung ist in den Zeichnungen dargestellt und wird anhand eines Ausführungsbeispiels näher erläutert. Es zeigt:
- Fig. 1: die Vorderansicht der erfindungsgemäßen Schneidemaschine mit einer Messertiefgangeinstellung;
- Fig. 2: einen Verstellmechanismus der Messertiefgangeinstellung entsprechend II in Fig. 1;
- Fign. 3a, 3b: Ansichten von oben auf den Verstellmechanismus, wobei ein Stellelement des Verstellmechanismus in Fig. 3a in einem drehblockierten Zustand und in Fig. 3b in einem nicht-drehblockierten Zustand gezeigt ist; und
- Fig. 4: eine Detailansicht einer Rastung für das Stellelement.

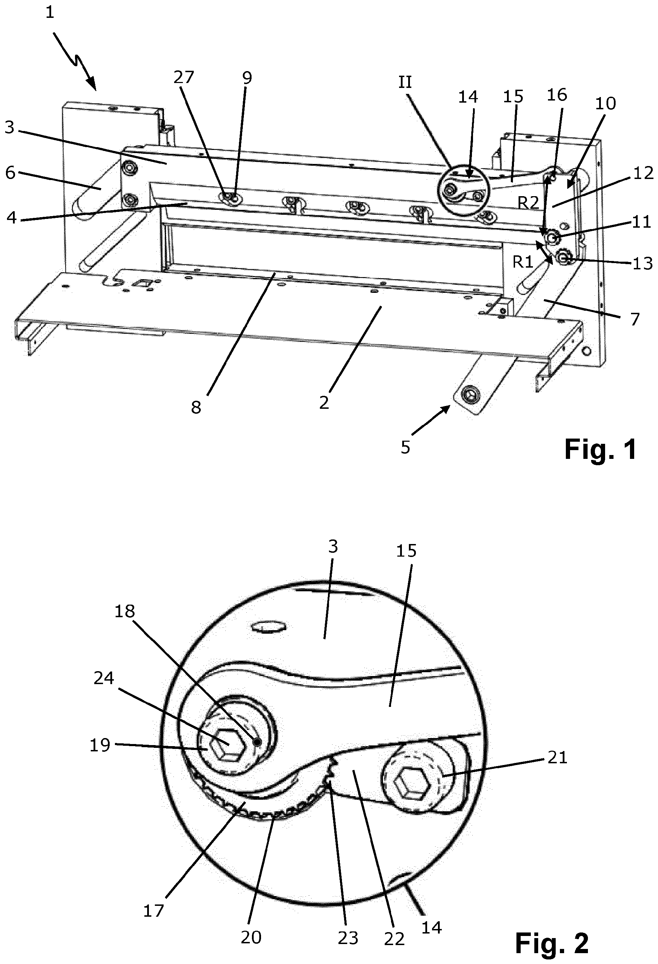

Die in **Fig. 1** gezeigte Schneidemaschine **1** umfasst eine Schneidauflage **2** für zu schneidendes Schnittgut, einen höhenverfahrbaren Messerbalken **3**, der ein Messer **4** zum Schneiden des aufliegenden Schnittguts trägt, und einen Schneideantrieb **5** zum Höhenverfahren des Messerbalkens 3. Der Messerbalken 3 ist in einer hier schräg verlaufenden Führungskulisse **6** höhenverfahrbar gelagert. Der Schneideantrieb 5 wird manuell betätigt oder elektrisch angetrieben und ist mit dem Messerbalken 3 über ein höhenbewegliches Antriebspleuel **7** bewegungsgekoppelt, dessen unterer Umkehrpunkt den unteren Umkehrpunkt der Messerbewegung definiert.

Als Gegenstück zur Messerschneide dient eine Schnittleiste **8**, die in der Regel bündig in die Schneidauflage 2 eingelassen ist. Da das Messer 4 auch die unterste Lage eines Schnittgutstapels durchtrennen soll, muss das Messer 4 minimal in die Schnittleiste 8 eindringen. Die Schnittleiste 8 ist üblicherweise aus Kunststoff gefertigt; dieser bietet einerseits genügend Festigkeit als Schneidgegenlager und lässt anderseits zu, dass das Messer 4 minimal in die Schnittleiste 8 eindringen kann, ohne selbst beschädigt zu werden. Die Schnittleiste 8 und das Messer 4 unterliegen beim Schneiden einem gewissen Verschleiß, sodass beide öfters ausgewechselt werden müssen, um ihre Funktion optimal zu erfüllen. Es ist also einerseits zu gewährleisten, dass auch die unterste Lage durchgeschnitten wird, andererseits sollen aber das Messer 4 und die Schnittleiste 8 bestmöglich geschont werden, um möglichst lange Standzeiten zu erreichen. Es ist also sehr wichtig, mit dem Messer 4 nur genau so weit in die Schnittleiste 8 einzudringen, wie es unbedingt notwendig ist.

Sind das Messer 4 und/oder die Schnittleiste 8 verschlissen, so müssen diese ausgetauscht werden. In das Messer 4 sind zu diesem Zweck Schrauben **9** durch den Messerbalken 3 geschraubt, die in dem Messerbalken 3 in Langlöchern **27** höhenverstellbar geführt sind. Die Befestigung erfolgt im unteren Umkehrpunkt der Messerbewegung, also im unteren Umkehrpunkt des Antriebspleuels 7, wobei die Langlöcher 27 eine grobe Lageanpassung der Messerschneide auf die Schnittleiste 8 zulassen, bevor die Schrauben 9 festgezogen werden. Damit liegt das Messer 4 zwar während des Schneidezyklus in seiner untersten Bewegungsstellung auf der Schnittleiste 8 auf, dringt aber nicht in diese ein.

Die nun notwendige Feineinstellung der Messerschneide in Bezug auf die Schnittleiste 8, also die Höhenverstellung des Messerbalkens 3 relativ zu dem unteren Umkehrpunkt des Antriebspleuels 7, wird mit einer Messertiefgangeinstellung **10** vorgenommen. Diese Messertiefgangeinstellung 10 umfasst einen am Messerbalken 3 um eine Horizontalachse in Form eines horizontalen Lagerbolzens **11** schwenkbar gelagerten Umlenkhebel **12**, an dem das Antriebspleuel 7 in einem Radialabstand **R1** zum Lagerbolzen 11 mittels eines Pleuelbolzens **13** angelenkt ist, sowie einen am Umlenkhebel 12 in einem Radialabstand **R2** zum Lagerbolzen 11 angreifenden Verstellmechanismus **14** zum Verdrehen und Feststellen des Umlenkhebels 12. Bevorzugt ist der Radialabstand R2, wie in Fig. 1 gezeigt, größer als der Radialabstand R1. Der Pleuelbolzen 13 ist am Umlenkhebel 12 sowohl gegenüber dem Lagerbolzen 11 horizontalversetzt als auch in einem Winkelbereich, bezogen auf die durch den Lagerbolzen 11 definierte Horizontalebene, von ca. +/-60° um den Lagerbolzen11 angeordnet.

Der Verstellmechanismus 14 weist einen Übertragungshebel **15** auf, der einenends mittels eines Hebelbolzens **16** an dem Umlenkhebel 12 angelenkt ist und, wie in **Fig. 2** gezeigt, anderenends exzentrisch an einem Stellelement **17** drehbar gelagert ist, welches seinerseits bei **18** an dem Messerbalken 3 drehbar gelagert ist. Dazu ist ein Lagerbolzen **19** exzentrisch am Stellelement 17 befestigt, um den der Übertragungshebel 15 drehbar gelagert ist. Das Stellelement 17 weist außerdem einen koaxial zu seiner Drehachse 18 angeordneten (Außen)Zahnkranz **20** auf. Mittels einer Schraube **21** ist am Messbalken 3 ein Fixierelement **22** mit mehreren Zähnen **23** angeschraubt, die im Eingriff mit dem Zahnkranz 20 stehen und so das Stellelement 17 in seiner Drehstellung feststellen. Der Lagerbolzen 19 weist eine Werkzeugaufnahme **24** mit nichtkreisrunder, hier sechskantförmiger Aufnahmekontur auf.

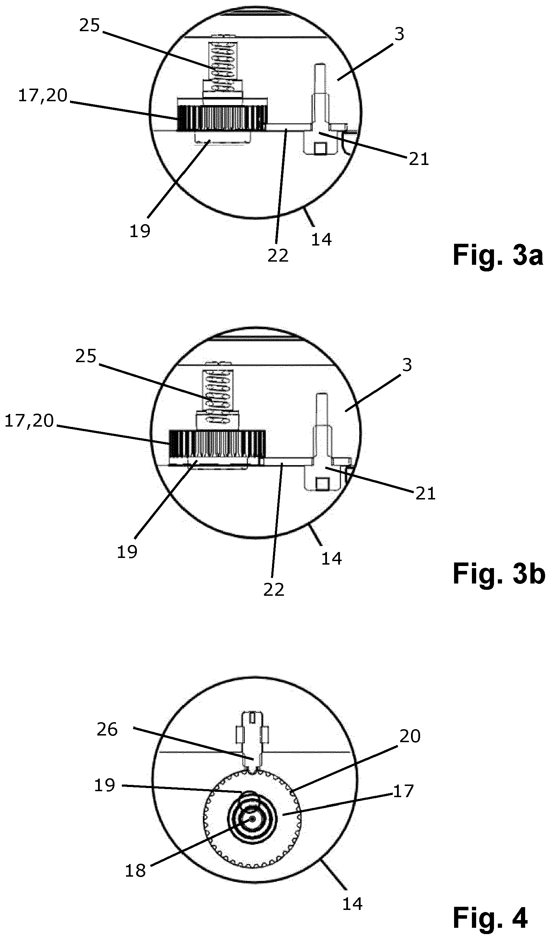

Das Stellelement 17 ist axial verschiebbar zwischen einer ersten Stellung (**Fig**. **3a**), in der der Zahnkranz 20 und die Zähne 23 miteinander im Eingriff stehen, und einer zweiten Stellung (**Fig. 3b**), in der die Zähne 23 und der Zahnkranz 20 nicht miteinander im Eingriff stehen und daher das Stellelement 17 gedreht werden kann. Das Stellelement 17 ist aus der ersten Stellung gegen die Wirkung einer Rückstellfeder **25** in die zweite Stellung verschiebbar. Wie in **Fig. 4** gezeigt, ist am Messerbalken 3 optional eine federbelastete Raste **26** angeordnet, die beim Drehen des Stellelements 17 jeweils von einer Zahnlücke zur nächsten Zahnlücke des Zahnkranzes 20 weiterrastet.

Der Funktionsablauf des Schneideprozesses ist wie folgt:
Der Antriebspleuel 7 ist einerseits mit den nicht dargestellten Komponenten des Schneideantriebs 5, wie z.B. eines Antriebskurbeltriebs, verbunden. Auf der anderen Seite ist der Antriebspleuel 7 über den Pleuelbolzen 13 an den Umlenkhebel 12 gekoppelt. Wird nun der Schneideprozess vom Bediener ausgelöst, so wird der Antriebspleuel 7 aus seiner oberen Ruhelage bis in seine untere Umkehrstellung nach unten gezogen. Da der Messerbalken 3 wiederum über den Lagerbolzen 11 mit dem Umlenkhebel 12 in Verbindung steht, folgt das Messer 4 dieser Abwärtsbewegung entlang der Führungskulisse 6, in der der Messerbalken 3 gelagert ist.

Das unter dem Messer 4 platzierte Schnittgut wird vom Messer 4 durchgeschnitten, wobei die Schnittleiste 8 als Schneidgegenlager dient. Nach erfolgtem Schnitt des zu schneidenden Schnittgutes fährt die gesamte Baugruppe in ihre obere Endlage zurück.

Der Funktionsablauf der Messertiefgangverstellung ist wie folgt:
Nachdem das Messer 4 und/oder die Schnittleiste 8 gewechselt wurden, muss der untere Umkehrpunkt des Messers 4 in der Regel korrigiert werden, um sicherzustellen, dass das Messer 4 soweit in die Schnittleiste 8 eindringt, dass auch die unterste Lage eines Schnittgutstapels gerade noch durchgeschnitten wird. Der Schneideantrieb 5, der mit dem Antriebspleuel 7 verbunden ist, macht bzgl. des Verfahrweges immer exakt die gleiche Hubbewegung. Beim Wechsel des Messers 4 wird dieses im unteren Umkehrpunkt, auf der Schnittleiste 8 aufliegend, an dem Messerbalken 3 befestigt. Zu diesem Zweck befinden sich in dem Messerbalken 3 die Langlöcher 27 für die Schrauben 9. Damit das Messer 4 minimal in die Schnittleiste 8 eindringt, muss die Distanz zwischen dem Antriebspleuel 7 und der Messerbefestigung minimal verlängert werden. Da es sich hier nur um wenige Zehntel eines Millimeters handelt, ist dies mit naheliegenden Wirkprinzipien, wie z.B. einem Antriebspleuel 7, der sich mittels einer Gewindespindel in der Länge verstellen lässt, nur unbefriedigend zu lösen. Je nach Steigung der Gewindespindel ergibt sich bereits bei geringer Verstellung der Gewindespindel eine relativ große Änderung des unteren Umkehrpunktes des Messers 4. Ein relativ großer Einstellbereich für den Bediener soll eine nur kleine Verschiebung des Umkehrpunkts des Messers 4 bewirken. Dadurch ergibt sich eine feinfühlige Einstellmöglichkeit.

Um den gewünschten Effekt zu erzielen, ist der Antriebspleuel 7 gelenkig am Umlenkhebel 12 befestigt, der seinerseits über einen Lagerbolzen 11 drehbar mit dem Messerbalken 4 verbunden ist. Die Anordnung ist derart ausgeführt, dass ein Verdrehen des Umlenkhebels 12 um den Lagerbolzen 11 eine Lageänderung des Pleuelbolzens 13 bewirkt. Die Lage des Pleuelbolzens 13 und damit des Angriffspunktes des Antriebspleuels 7 bestimmen die obere und untere Endlage des Messerbalkens 4 und damit des Messers 4 während des Schneidezyklus.

Ist der Hebelbolzen 16 deutlich weiter vom Lagerbolzen 11 entfernt als der Pleuelbolzen 13 (R2 >> R1), so ergibt sich über die Abstandsverhältnisse beim Schwenken des Umlenkhebels 12 um den Lagerbolzen 11 bei einer relativ großen Lageänderung des Hebelbolzens 16 eine nur relativ kleine Lageänderung des Pleuelbolzens 13. Auch die Winkellagen des Hebelbolzens 16 und des Pleuelbolzens 13 auf ihren Teilkreisen um den Lagerbolzen 11 bestimmen, wie stark sich eine Positionsänderung am Hebelbolzen 16 über den Umlenkhebel 12 auf die Veränderung des unteren Umkehrpunktes des Messers 4 auswirkt. Wird der Pleuelbolzen 13 in seiner Ausgangsstellung auf einem Teilkreis um den Lagerbolzen 11 senkrecht unterhalb des Lagerbolzens 11 angeordnet, so führt ein Verdrehen des Umlenkhebels 12 um einige Winkelgrade zu nahezu keiner Veränderung am unteren und oberen Umkehrpunkt des Messers 4, da sich der Höhenabstand zwischen Antriebspleuel 7 und Messer 4 nur minimal verändert. Wird der Pleuelbolzen 13 hingegen auf demselben Teilkreis in seiner Ausgangsstellung waagrecht zum Lagerbolzen 11 angeordnet, so führt ein Verdrehen des Umlenkhebels 12 um einige Winkelgrade zu einer wesentlich größeren Veränderung am unteren und oberen Umkehrpunkt des Messers 4, da sich der Höhenabstand zwischen Antriebspleuel 7 und Messer 4 stärker verändert ("Sinuskurveneffekt").

Das bedeutet, über die Änderung der Abstände und Winkelanordnungen der Bolzen 11, 13, 16 zueinander kann die Einstellempfindlichkeit in einem großen Bereich verändert werden. Damit kann der gewünschte Effekt, dass dem Bediener über ein Übersetzungsverhältnis eine feinfühlige Verstellmöglichkeit des unteren Umkehrpunktes des Messers 4 bereitgestellt wird, realisiert werden.

Um dem Bediener die Einstellung des unteren Messerumkehrpunktes an einer ergonomisch optimalen Position in seinem Arbeitsbereich zu ermöglichen, wird der Umlenkhebel 12 über den Übertragungshebel 15 bewegt. Dieser Übertragungshebel 15 greift, gelenkig gelagert, am Hebelbolzen 16 des Umlenkhebels 12 an. Am anderen Ende des Übertragungshebels 15 greift der Verstellmechanismus 14 an, der den Umlenkhebel 12 für die Messertiefgangeinstellung verdreht und feststellt. Um die gewünschte Auslenkung des Übertragungshebels 15 und damit des Umlenkhebels 12 zu bewerkstelligen, ist dieser an dem mittig gelagerten Stellelement 17 außermittig drehbar befestigt. Wird das Stellelement 17 um seine Mittelachse verdreht, so ergibt sich durch die außermittige Befestigung des Übertragungshebels 15 am Stellelement 17 die gewünschte translatorische Bewegung des Übertragungshebels 15, die den Umlenkhebel 12 über den Hebelbolzen 16 bewegt.

Beim Schneiden des Schnittgutes werden oft hohe Schnittkräfte benötigt, die der Schneideantrieb 5 bereitstellen muss. Diese Kräfte wirken im gesamten Antriebsstrang. Da die Kräfte über den Antriebspleuel 7 auf den Umlenkhebel 12 wirken, ergibt sich durch den Versatz des Pleuelbolzens 13 zum Lagerbolzen 11 ein Moment, das über den Hebelbolzen 16 auf den Übertragungshebel 15 wirkt. Der Übertragungshebel 15 seinerseits überträgt dadurch eine translatorische Kraft, die durch die außermittige Befestigung des Übertragungshebels 15 am Stellelement 17 wiederum in ein Moment umgesetzt wird. Dieses Moment versucht das Stellelement 17 in eine Drehbewegung zu versetzen. Das Stellelement 17 soll also einerseits vom Bediener leicht zum Einstellen des Messertiefgangs verdreht werden können, anderseits darf sich das Stellelement 17 beim Schneiden des Schnittguts nicht verstellen. Um beide Funktionen abbilden zu können, weist das Stellelement 17 den Zahnkranz 20 auf, in den die Zähne 23 des Fixierelements 22 eingreifen. Das Stellelement 17 ist somit in seiner Drehbewegung gehindert und kann sich während des Schneidevorgangs nicht selbsttätig verstellen.

Möchte der Bediener das Stellelement 17 zum Einstellen des Messertiefgangs verstellen, so benutzt er hierzu ein Werkzeug, das der Maschine beiliegt. Dieses Werkzeug passt formschlüssig in die Werkzeugaufnahme 24 des Lagerbolzens 19. Drückt der Bediener nun mit dem Werkzeug gegen das Stellelement 17, so wird das Stellelement 17 aus seiner drehblockierten, ersten Stellung gegen die Wirkung der Rückstellfeder 25 in die nicht-drehblockierte, zweite Stellung verschoben. Das Stellelement 17 kann nun vom Bediener zur Messertiefgangeinstellung, mit den zuvor beschriebenen Effekten, verdreht werden. Nach erfolgter Einstellung zieht der Bediener das Werkzeug ab, und das Stellelement 17 wird durch die Rückstellfeder 25 zurück in seine erste Stellung bewegt, in der es wieder in die Zähne 23 eingreift und damit in seiner neuen Drehposition blockiert ist. Die Messertiefgangeinstellung, also das Eindrücken und Verdrehen des Stellelements 17 mittels des Werkzeugs, ist somit mit einer Einhandbedienung möglich. Vorteilhaft können mit demselben Werkzeug auch die Schrauben 9 gelöst bzw. festgezogen werden.

Die Raste 26 hilft dem Bediener, gezielt eine Drehposition des Stellelements 17 einzustellen bzw. wiederzufinden. Die Raste 26 lässt das Stellelement 17 beim Verdrehen in vorgegebenen Winkelstellungen einrasten, so dass der Bediener sich beispielweise von einer Einrastposition zur nächsten "herantasten" kann, um die optimale Einstellung zu finden. Eine solche Stellelementrastung gibt dem Maschinenhersteller auch die Möglichkeit, dem Bediener den Einstellvorgang, beispielsweise in der Bedienungsanleitung, besser beschreiben zu können, indem er vorgibt, um wie viele Rastpunkte das Stellelement 17 als Grundeinstellung verdreht werden soll. Als Orientierungshilfe für die Einstellung können alternativ auch das Stellelement 17 mit einer seiner Drehrichtung folgenden Skala und der Messerbalken 3 mit einer Markierung versehen werden, an der der jeweilige Skalenwert abgelesen werden kann.

## Patentansprüche

1. Schneidemaschine (1) mit einer Schneidunterlage (2) für zu schneidendes Schnittgut, mit einem höhenverfahrbaren Messerbalken (3), der ein Messer (4) zum Schneiden des aufliegenden Schnittguts trägt, mit einem Schneideantrieb (5) zum Höhenverfahren des Messerbalkens (3) und mit einer Messertiefgangeinstellung (10) zum Höhenverstellen des Messerbalkens (3) relativ zu einem höhenbeweglichen Antriebselement (7) des Schneideantriebs (5),
**dadurch gekennzeichnet,**
**dass** die Messertiefgangeinstellung (10) einen am Messerbalken (3) um eine Horizontalachse (11) schwenkbar gelagerten Umlenkhebel (12), an dem das Antriebselement (7) in einem ersten Radialabstand (R1) zur Horizontalachse (11) angelenkt ist, sowie einen am Umlenkhebel (12) in einem zweiten Radialabstand (R2) zur Horizontalachse (11) angreifenden Verstellmechanismus (14) zum Verdrehen und Feststellen des Umlenkhebels (12) aufweist.

2. Schneidemaschine nach Anspruch 1, **dadurch gekennzeichnet, dass** der zweite Radialabstand (R2) größer als der erste Radialabstand (R1) ist, insbesondere mindestens doppelt so groß wie der erste Radialabstand (R1) ist.

3. Schneidemaschine nach Anspruch 1 oder 2, **dadurch gekennzeichnet, dass** der Angriffspunkt (13) des Antriebselements (7) am Umlenkhebel (12) gegenüber der Horizontalachse (11) horizontalversetzt angeordnet ist.

4. Schneidemaschine nach Anspruch 3, **dadurch gekennzeichnet, dass** der Angriffspunkt (13) des Antriebselements (7) am Umlenkhebel (12) in einem Winkelbereich, bezogen auf die durch die Horizontalachse (11) des Umlenkhebels (12) definierte Horizontalebene, von +/- 60° um die Horizontalachse (11) angeordnet ist.

5. Schneidemaschine nach einem der vorhergehenden Ansprüche, **dadurch gekennzeichnet, dass** der Verstellmechanismus (14) einen Übertragungshebel (15) aufweist, der einenends am Umlenkhebel (12) angelenkt und anderenends am Messerbalken (3) abgestützt ist.

6. Schneidemaschine nach Anspruch 5, **dadurch gekennzeichnet, dass** der Übertragungshebel (15) anderenends exzentrisch an einem Stellelement (17), welches am Messerbalken (3) drehbar gelagert ist, angelenkt ist.

7. Schneidemaschine nach Anspruch 6, **dadurch gekennzeichnet, dass** das Stellelement (17) eine Werkzeugaufnahme (24) mit nichtkreisrunder Aufnahmekontur aufweist.

8. Schneidemaschine nach Anspruch 6 oder 7, **dadurch gekennzeichnet, dass** das Stellelement (17) einen koaxial zu seiner Drehachse (18) angeordneten Zahnkranz (20) und der Messbalken (3) mindestens einen Zahn (23) aufweisen, oder umgekehrt, wobei der Zahnkranz (20) und der mindestens eine Zahn (23) miteinander im Eingriff stehen, um das Stellelement (17) in einer Drehstellung festzustellen.

9. Schneidemaschine nach Anspruch 8, **dadurch gekennzeichnet, dass** das Stellelement (17) axial verschiebbar ist zwischen einer ersten Stellung, in der der Zahnkranz (20) und der mindestens eine Zahn (23) miteinander im Eingriff stehen, und einer zweiten Stellung, in der der Zahnkranz (20) und der mindestens eine Zahn (23) miteinander nicht im Eingriff stehen und das Stellelement (17) gedreht werden kann.

10. Schneidemaschine nach Anspruch 9, **dadurch gekennzeichnet, dass** das Stellelement (17) aus der ersten Stellung gegen die Wirkung einer Rückstellfeder (25) in die zweite Stellung verschiebbar ist.

11. Schneidemaschine nach einem der Ansprüche 8 bis 10, **dadurch gekennzeichnet, dass** an dem Messerbalken (3) eine federbelastete Raste (26) angeordnet ist, die beim Drehen des Stellelements (17) jeweils von einer Zahnlücke zur nächsten Zahnlücke des Zahnkranzes (20) weiterrastet.

12. Schneidemaschine nach einem der Ansprüche 8 bis 11, **dadurch gekennzeichnet, dass** das Stellelement (17) eine seiner Drehrichtung folgende Skala und der Messerbalken (3) eine mit der Skala zusammenwirkende Markierung aufweist, oder umgekehrt.

## Claims

1. Cutting machine (1) comprising a cutting support (2) for material to be cut, a vertically movable blade bar (3) which bears a blade (4) for cutting the cut material located thereon, a cutting drive (5) for vertically moving the blade bar (3) and a blade depth adjustment (10) for vertically adjusting the blade bar (3) relative to a vertically movable drive element (7) of the cutting drive (5),
**characterized**
**in that** the blade depth adjustment (10) comprises a deflection lever (12) which is pivotably mounted about a horizontal axis (11) on the blade bar (3), the drive element (7) being articulated thereon at a first radial distance (R1) to the horizontal axis (11), as well as an adjusting mechanism (14) acting on the deflection lever (12) at a second radial distance (R2) to the horizontal axis (11), for rotating and fixing the deflection lever (12).

2. Cutting machine according to claim 1, **characterized in that** the second radial distance (R2) is greater than the first radial distance (R1), in particular at least double the size of the first radial distance (R1).

3. Cutting machine according to claim 1 or 2, **characterized in that** the point of action (13) of the drive element (7) on the deflection lever (12) is arranged horizontally offset relative to the horizontal axis (11).

4. Cutting machine according to claim 3, **characterized in that** the point of action (13) of the drive element (7) on the deflection lever (12) is arranged in an angular range relative to the horizontal plane defined by the horizontal axis (11) of the deflection lever (12), of +/- 60° about the horizontal axis (11).

5. Cutting machine according to one of the preceding claims, **characterized in that** the adjusting mechanism (14) comprises a transmission lever (15) which is articulated at one end on the deflection lever (12) and at the other end is supported on the blade bar (3).

6. Cutting machine according to claim 5, **characterized in that** the transmission lever (15) is articulated at the other end eccentrically on an adjusting element (17) which is rotatably mounted on the blade bar (3).

7. Cutting machine according to claim 6, **characterized in that** the adjusting element (17) has a tool receiver (24) with a non-circular receiving contour.

8. Cutting machine according to claim 6 or 7, **characterized in that** the adjusting element (17) has a toothed ring (20) arranged coaxially to the axis of rotation (18) thereof and the blade bar (3) has at least one tooth (23), or vice versa, wherein the toothed ring (20) and the at least one tooth (23) are in engagement with one another in order to fix the adjusting element (17) in a rotational position.

9. Cutting machine according to claim 8, **characterized in that** the adjusting element (17) is axially displaceable between a first position in which the tooted ring (20) and the at least one tooth (23) are in engagement with one another, and a second position in which the toothed ring (20) and the at least one tooth (23) are not in engagement with one another and the adjusting element (17) may be rotated.

10. Cutting machine according to claim 9, **characterized in that** the adjusting element (17) is displaceable from the first position into the second position counter to the action of a restoring spring (25).

11. Cutting machine according to one of claims 8 to 10, **characterized in that** a spring-loaded latch (26) is arranged on the blade bar (3), said latch in each case being latched progressively from one tooth gap to the next tooth gap of the toothed ring (20), when rotating the adjusting element (17).

12. Cutting machine according to one of claims 8 to 11, **characterized in that** the adjusting element (17) has a scale following the rotational direction thereof and the blade bar (3) has a marking cooperating with the scale, or vice versa.

## Revendications

1. Machine de découpe (1) comprenant une embase de sectionnement (2) destinée à un matériau à découper ; une barre (3) porte-lame, déplaçable en hauteur et portant une lame (4) dévolue au sectionnement dudit matériau à découper reposant à plat ; un entraînement de sectionnement (5) affecté au déplacement en hauteur de la barre (3) porte-lame ; et un réglage (10) de la profondeur de course de la lame, dédié au réglage en hauteur de ladite barre (3) porte-lame par rapport à un élément d'entraînement (7) dudit entraînement de sectionnement (5), mobile en hauteur,
**caractérisée par le fait**
**que** le réglage (10) de la profondeur de course de la lame comporte un levier de renvoi (12) monté à pivotement autour d'un axe horizontal (11), sur la barre (3) porte-lame, et sur lequel l'élément d'entraînement (7) est articulé, à une première distance radiale (R1) par rapport audit axe horizontal (11), ainsi qu'un mécanisme de réglage (14) qui vient en prise avec ledit levier de renvoi (12) à une seconde distance radiale (R2) par rapport audit axe horizontal (11), et est dédié à la mise en rotation et au blocage dudit levier de renvoi (12).

2. Machine de découpe selon la revendication 1, **caractérisée par le fait que** la seconde distance radiale (R2) est supérieure à la première distance radiale (R1) et représente, en particulier, au moins le double de ladite première distance radiale (R1).

3. Machine de découpe selon la revendication 1 ou 2, **caractérisée par le fait que** le point (13) de venue en prise de l'élément d'entraînement (7), avec le levier de renvoi (12), est disposé avec décalage horizontal par rapport à l'axe horizontal (11).

4. Machine de découpe selon la revendication 3, **caractérisée par le fait que** le point (13) de venue en prise de l'élément d'entraînement (7) avec le levier de renvoi (12) est situé dans une plage angulaire de +/- 60°, autour de l'axe horizontal (11), rapportée au plan horizontal défini par ledit axe horizontal (11) dudit levier de renvoi (12).

5. Machine de découpe selon l'une des revendications précédentes, **caractérisée par le fait que** le mécanisme de réglage (14) est muni d'un levier de transmission (15) articulé sur le levier de renvoi (12), par une extrémité, et prenant appui sur la barre (3) porte-lame par l'autre extrémité.

6. Machine de découpe selon la revendication 5, **caractérisée par le fait que** le levier de transmission (15) est articulé de manière excentrée, par l'autre extrémité, sur un élément d'ajustement (17) monté à rotation sur la barre (3) porte-lame.

7. Machine de découpe selon la revendication 6, **caractérisée par le fait que** l'élément d'ajustement (17) est pourvu d'un logement d'outillage (24) à profil de réception non circulaire.

8. Machine de découpe selon la revendication 6 ou 7, **caractérisée par le fait que** l'élément d'ajustement (17) est doté d'une couronne dentée (20) implantée coaxialement à son axe de rotation (18) et la barre (3) porte-lame est nantie d'au moins une dent (23), ou inversement, sachant que ladite couronne dentée (20), et ladite dent (23) à présence minimale, engrènent l'une dans l'autre en vue de bloquer ledit élément d'ajustement (17) dans une position prise par rotation.

9. Machine de découpe selon la revendication 8, **caractérisée par le fait que** l'élément d'ajustement (17) est apte à coulisser axialement entre une première position dans laquelle la couronne dentée (20), et la dent (23) à présence minimale, engrènent l'une dans l'autre et une seconde position dans laquelle ladite couronne dentée (20), et ladite dent (23) à présence minimale, n'engrènent pas l'une dans l'autre, et ledit élément d'ajustement (17) peut être animé de rotations.

10. Machine de découpe selon la revendication 9, **caractérisée par le fait que** l'élément d'ajustement (17) peut coulisser vers la seconde position, à partir de la première position, en s'opposant à l'action d'un ressort de rappel (25).

11. Machine de découpe selon l'une des revendications 8 à 10, **caractérisée par le fait qu'**un cran (26) sollicité élastiquement, implanté sur la barre (3) porte-lame, s'encliquette constamment, d'un entredent respectif à l'entredent suivant de la couronne dentée (20), au cours de la rotation de l'élément d'ajustement (17).

12. Machine de découpe selon l'une des revendications 8 à 11, **caractérisée par le fait que** l'élément d'ajustement (17) est muni d'une échelle graduée suivant sa direction de rotation et la barre (3) porte-lame est dotée d'un repère coopérant avec ladite échelle graduée, ou inversement.
